# EUROPÄISCHE PATENTSCHRIFT

(11) **EP 0 405 184 B1**
(45) Veröffentlichungstag und Bekanntmachung des Hinweises auf die Patenterteilung: **05.04.1995**
(21) Anmeldenummer: 90110550.2
(22) Anmeldetag: 02.06.1990
(51) Int. Cl.: B30B 5/06, B27D 3/04, B27N 3/24

(54) **Wärmeleitende Elemente für kontinuierlich arbeitende Doppelbandpresse**
Heat transfer elements for a continuous double band press
Elements de transfert de chaleur dans une presse à doubles bandes

(30) Priorität: 29.06.1989 DE 3921364
(43) Veröffentlichungstag der Anmeldung: 02.01.1991
(73) Patentinhaber: Held, Kurt, D-78647 Trossingen (DE)
(72) Erfinder: Held, Kurt, D-78647 Trossingen (DE)

(56) Entgegenhaltungen:
- EP-A- 0 131 879
- EP-A- 0 140 039
- EP-A- 0 245 762
- EP-A- 0 291 756
- EP-A- 0 292 738
- DE-A- 2 006 781
- DE-A- 3 028 145
- DE-A- 3 545 159
- DE-A- 3 709 958
- DE-C- 853 402
- US-A- 3 986 918
- US-A- 4 375 350
- TECHNICAL DISCLOSURE BULLETIN, Juni 1988, Nr. 290104, New York, US
- DERWENT WORLD PATENT INDEX LATEST, AN=85-120426 [20], Derwent Publications Ltd, London, GB; & NL-A-83 03 373 (STORK BRABANT)

## Beschreibung

Die Erfindung betrifft eine kontinuierlich arbeitende Doppelbandpresse zur Herstellung von Laminaten, Span- oder Faserplatten, Sperrholz oder dergleichen gemäß dem Oberbegriff des Patentanspruchs 1.

Doppelbandpressen (siehe auch DE-OS 24 21 296) dienen zur kontinuierlichen Herstellung endloser bahnförmiger Werkstoffe, insbesondere zur Herstellung von dekorativen Schichtstofflaminaten, kupferkaschierten Elektrolaminaten, Thermoplastbahnen, Spanplatten, Faserplatten und dergleichen. Diese Doppelbandpressen besitzen zwei endlos umlaufende Preßbänder, zwischen denen die Werkstoffbahn unter Einwirkung von Druck und gegebenenfalls auch Wärme bei gleichzeitigem Transport in Vorlaufrichtung ausgehärtet wird. Zur Erzeugung des auf die Werkstoffbahn wirkenden Druckes besitzen die sogenannten isobaren Maschinen dieser Gattung Druckkammern, die von einer Druckplatte und dem Preßband in vertikaler Richtung und seitlich durch Gleitflächendichtungen begrenzt werden. In diesen Druckkammern wird der Druck durch fluide Druckmittel, wie Öl oder Druckluft, aufgebaut.

Zur Zuführung von Wärme auf das Preßgut ist es bekannt, die einlaufseitigen Umlenktrommeln der Doppelbandpresse beheizbar auszubilden. Dadurch werden die Preßbänder der Doppelbandpresse an den beheizten Umlenktrommeln erwärmt. Die Preßbänder transportieren dann die aufgenommene Wärmemenge in den Bereich, in dem das zwischen den beiden Preßbändern liegende Preßgut unter Flächendruck gesetzt wird, die sogenannte Reaktionszone, und geben die Wärme dort an das Preßgut ab. Aufgrund der beschränkten Wärmekapazität der Preßbänder reicht diese Wärmemenge in vielen Fällen jedoch nicht aus.

Aus der DE-OS 33 25 578 sind wärmeleitende Elemente bekannt geworden, mit deren Hilfe zusätzliche Wärme im Bereich der Reaktionszone auf die Preßbänder übertragen werden kann. Diese wärmeleitenden Elemente bestehen aus einem gut wärmeleitfähigen Material und sind mit einer Fläche unter Ausbildung eines guten Wärmeleitkontakts an der Druckplatte in der Doppelbandpresse angeordnet. Die andere Fläche der wärmeleitenden Elemente berührt die Innenseiten der Preßbänder im Bereich der Reaktionszone schleifend. Die Druckplatten sind auf eine höhere Temperatur als die Solltemperatur der Reaktionszone aufgeheizt, so daß zwischen den Druckplatten und den Preßbändern ein Wärmegefälle entsteht und ein Wärmestrom von den Druckplatten über die wärmeleitenden Elemente auf das Preßband fließt. Diese zusätzliche Wärme wird von den Preßbändern dann auf das Preßgut übertragen. Mit einer solchen Anordnung ist auch eine Kühlung der Preßbänder möglich, indem die Druckplatte gekühlt wird.

Zur Erwärmung der Druckplatten in der Doppelbandpresse ist es aus der DE-OS 24 21 296 weiter bekannt, als Bohrungen ausgebildete Kanäle in die Druckplatte einzubringen, die von einem erwärmten fluiden Medium durchflossen werden. Soll die Druckplatte gekühlt werden, so wird ein gekühltes fluides Medium durch diese Bohrungen geleitet. Als fluide Medien eignen sich beispielweise Gase bzw. Dämpfe oder auch Flüssigkeiten, wie Thermoöl bzw. Kühlflüssigkeiten. Als Kühlflüssigkeit läßt sich beispielsweise wiederum Wasser einsetzen. Solche Medien zur Erwärmung oder Kühlung der Druckplatte werden im folgenden kurz Wärmeträgermittel genannt.

Nachteil bei den bekannten wärmeleitenden Elementen ist, daß ein Wärmeübergang von dem in den Bohrungen der Druckplatte fließenden Wärmeträgermittel auf die Druckplatte, von der Druckplatte auf das wärmeleitende Element und von dem wärmeleitenden Element schließlich auf das Preßband erfolgt. Jeder Wärmeübergang führt zu einer Verringerung der effektiven Wärmeleitfähigkeit. Auch der weite Weg von den Bohrungen in der Druckplatte zu dem Preßband führt zu einer Begrenzung des Wärmestromes. In manchen Anwendungsfällen kann daher die mittels der wärmeleitenden Elemente maximal übertragbare Wärme nicht ausreichen.

Der Erfindung liegt die Aufgabe zugrunde, die wärmeleitenden Elemente im Druckkissen der Doppelbandpresse so weiterzuentwickeln, daß eine bessere Wärmeleitfähigkeit erzielt wird und dadurch eine größere Wärmemenge im Bereich der Reaktionszone auf das Preßband zu übertragen ist.

Die Lösung dieser Aufgabe wird durch die im Kennzeichen des Patentanspruchs 1 beschriebene technische Lehre vermittelt.

Vorteilhafte Ausgestaltungen der Erfindung sind in den Unteransprüchen angegeben. Besonders vorteilhaft kann das erfindungsgemäße wärmeleitende Element in der Druckplatte am Übergang von der Heiz- in die Kühlzone angeordnet sein. Dadurch wird das Band an dieser Stelle mechanisch gestützt und die Gefahr der Knickung des Bandes in Folge von Wärmedehnungen bzw. -kontraktionen aufgrund der großen Temperaturunterschiede in der Heiz- und Kühlzone sind somit wirkungsvoll gebannt.

Die mit der Erfindung erzielbaren Vorteile bestehen insbesondere darin, daß der Wärmeübergang von den Bohrungen zu der Druckplatte und von der Druckplatte auf das wärmeleitende Element entfällt und der Wärmestrom zum Preßband somit den kürzestmöglichen Weg besitzt. Insgesamt gesehen läßt sich dadurch eine weitaus größere Wärmemenge auf das Preßgut in der Reaktionszone übertragen oder vom Preßgut in der Reaktionszone abführen, als es bisher nach dem Stand der Technik möglich war.

Ein bevorzugtes Ausführungsbeispiel der Erfindung ist den Zeichnungen dargestellt und wird im folgenden näher beschrieben. Es zeigen
- Fig. 1: schematisch eine Doppelbandpresse im Schnitt aus der Seitenansicht,
- Fig. 2: einen Schnitt durch den Einlaufbereich in die Doppelbandpresse,
- Fig. 3: die Ansicht einer Druckplatte von der Preßbandinnenseite aus gesehen,
- Fig. 4: einen Schnitt entlang der Linie der Linie A-A aus Figur 3,
- Fig. 5: einen Schnitt durch ein wärmeleitendes Element,
- Fig. 6: die Draufsicht auf ein wärmeleitendes Element entsprechend der Richtung B aus Figur 5,
- Fig. 7: einen Schnitt durch ein wärmeleitendes Element in einer anderen Ausführungsform,
- Fig. 8: einen Schnitt durch ein wärmeleitendes Element in einer weiteren Ausführungsform,
- Fig. 9: einen Schnitt durch ein wärmeleitendes Element ebenfalls in einer weiteren Ausführungsform,
- Fig. 10: schematisch einen Schnitt aus der Seitenansicht einer Doppelbandpresse mit einer Heiz- und Kühlzone,
- Fig. 11: die Ansicht einer Druckplatte in der Übergangszone zwischen Heiz- und Kühlzone von der Preßbandinnenseite aus gesehen,
- Fig. 12: einen Schnitt entlang der Linie B-B aus Figur 11,
- Fig. 13: einen Schnitt entlang der Linie C-C aus Figur 11,
- Fig. 14: einen Längsschnitt durch ein wärmeleitendes Element in der Übergangszone In einer weiteren Ausführungsform,
- Fig. 15: einen Schnitt in Querrichtung durch ein wärmeleitendes Element in der Übergangszone in der weiteren Ausführungsform und
- Fig. 16: die Draufsicht auf ein flexibles wärmeleitendes Element.

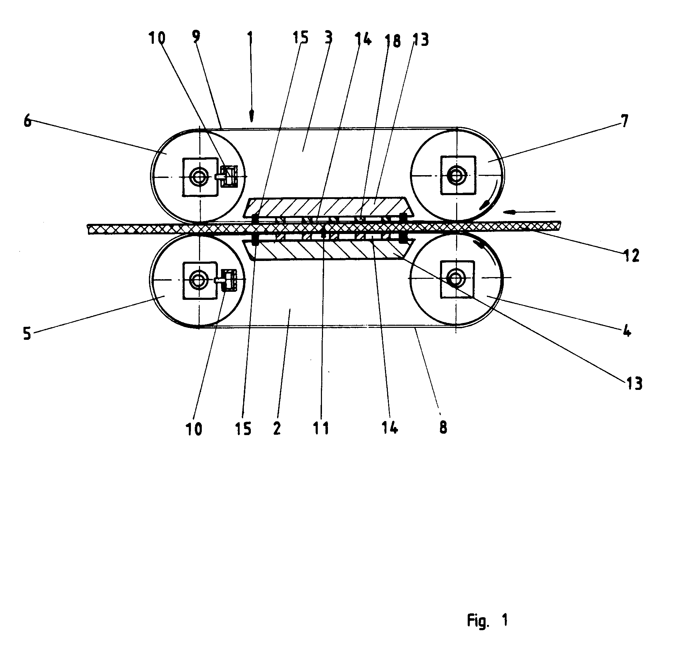

Die in Figur 1 dargestellte kontinuierlich arbeitende Doppelbandpresse 1 besteht aus einer unteren Preßbandeinheit 2 und einer oberen Preßbandeinheit 3, die übereinander angeordnet sind. Die Preßbandeinheiten 2, 3 setzen sich wiederum aus je zwei Umlenktrommeln 4, 5 bzw. 6, 7 und je einem endlosen Preßband 8, 9 zusammen. Das gewöhnlicherweise aus einem hochzugfesten Stahlband bestehende Preßband 8, 9 ist um die Umlenktrommeln 4, 5 bzw. 6, 7 herumgeführt und mittels Hydraulikzylindern 10 gespannt. Die vier Umlenktrommeln 4, 5, 6, 7 sind in einem in der Zeichnung aus Ubersichtlichkeitsgründen nicht dargestellten Pressengestell drehbar gelagert. Mindestens eine Umlenktrommel jeder Preßbandeinheit 2, 3 wird durch einen Motor angetrieben, so daß sich die beiden Preßbänder 8, 9 entsprechend den Pfeilen in den Umlenktrommeln 4, 7 bewegen. Zwischen dem unteren Bandtrum des oberen Preßbandes 9 und dem oberen Bandtrum des unteren Preßbandes 8 liegt die Reaktionszone 11, in der die in der Zeichnung von rechts nach links vorlaufende Werkstoffbahn 12 unter Flächendruck und Wärmeeinwirkung während des Durchlaufs durch die Doppelbandpresse 1 verpreßt wird.

Die Werkstoffbahn 12 kann beispielsweise aus mit Kunstharz imprägnierten Geweben, Schichtstoffen, Faser-Bindemittel-Gemischen, Thermoplastbahnen und dergleichen bestehen. Im vorliegenden Ausführungsbeispiel handelt es sich bei der Werkstoffbahn 12 um einzelne, zu einem Schichtgebilde aufeinandergeschichtete Glasfasergewebebahnen, die mit einem Epoxyharz imprägniert sind, und auf den Oberflächen des Schichtgebildes aufliegenden Kupferfolienbahnen, die in der Doppelbandpresse 1 zu einer kupferkaschierten Laminatbahn verpreßt werden, Ein solches kupferkaschiertes Laminat dient als Ausgangsmaterial für die Herstellung von Leiterplatten.

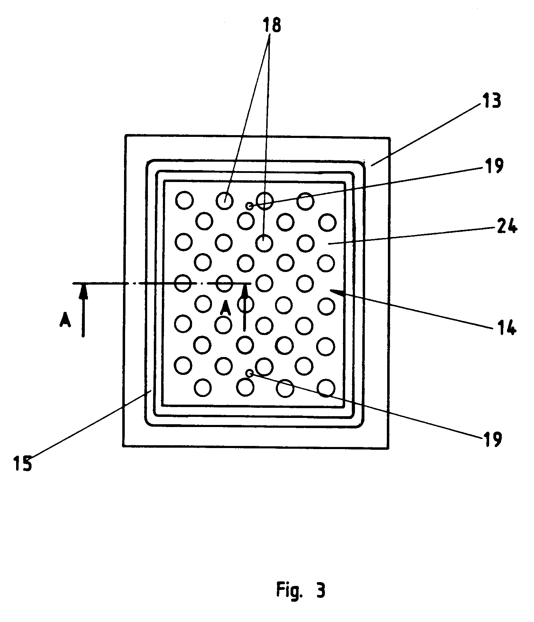

Zur Erzeugung des auf die Werkstoffbahn 12 in der Reaktionszone 11 einwirkenden Flächendrucks sind im Pressengestell der Doppelbandpresse 1 Druckplatten 13 angeordnet, von denen der Druck hydraulisch auf die Innenseiten der Preßbänder 8, 9 aufgebracht und dann von diesen auf die Werkstoffbahn 12 übertragen wird. Bei der hydraulischen Druckübertragung wird ein unter Druck setzbares fluides Druckmedium in den Raum zwischen der Druckplatte 13 und der Innenseite des Preßbandes 8, 9 gebracht. Zu den Seiten ist dieser Raum, die sogenannte Druckkammer 14, von einer ringförmig in sich geschlossenen, in der Druckplatte 13 angebrachten und auf der Innenseite des Preßbandes 8, 9 gleitenden Gleitflächendichtung 15 begrenzt. Als Druckmedium wird vorzugsweise ein synthetisches Öl verwendet. Genausogut kann jedoch auch ein Gas, beispielsweise Druckluft, verwendet werden. Zur Zuführung des Druckmittels in die Druckkammer 14 befinden sich in der Druckplatte 13 Einlaßöffnungen 19, die in Figur 3 zu sehen sind.

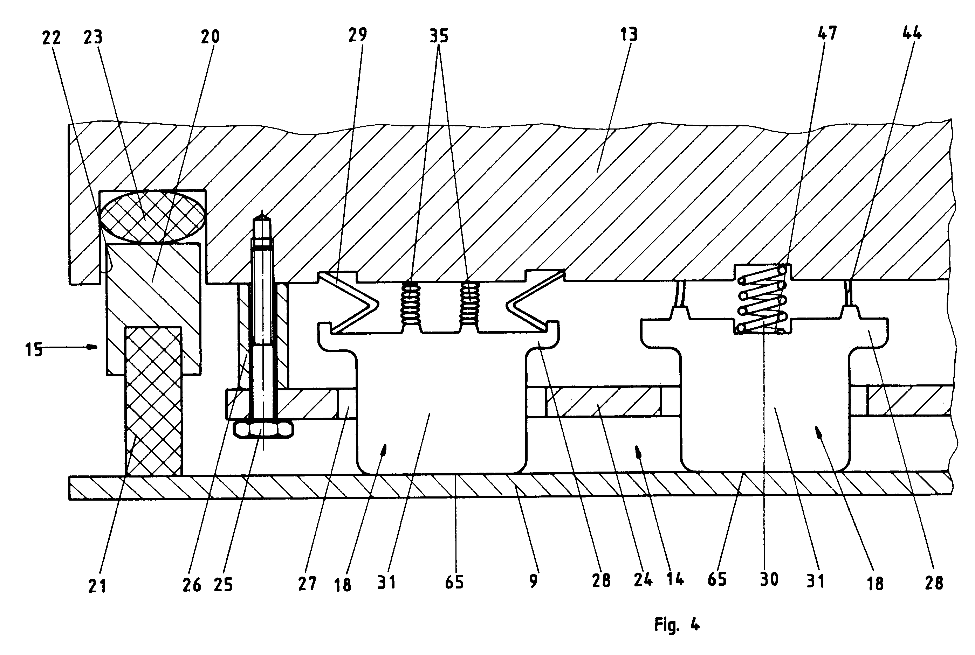

Die Gleitflächendichtung 15 besteht, wie in Figur 4 näher gezeigt ist, aus einer U-förmigen Halteleiste 20, in der der eigentliche Dichtungskörper 21 befestigt ist. Die U-förmige Halteleiste 20 ist in einer Nut 22 der Druckplatte 13 angeordnet und wird vom Nutgrund her mit einem Druckmittel beaufschlagt, so daß der Dichtungskörper 21 gegen das sich bewegende Preßband 8, 9 angepreßt wird und so die Druckkammer 14 zur Atmosphäre abdichtet. An der U-förmigen Halteleiste 20 liegt in der Nut 22 ein O-Ring 23 an, der die Nut 22 wiederum gegenüber der Atmosphäre abdichtet.

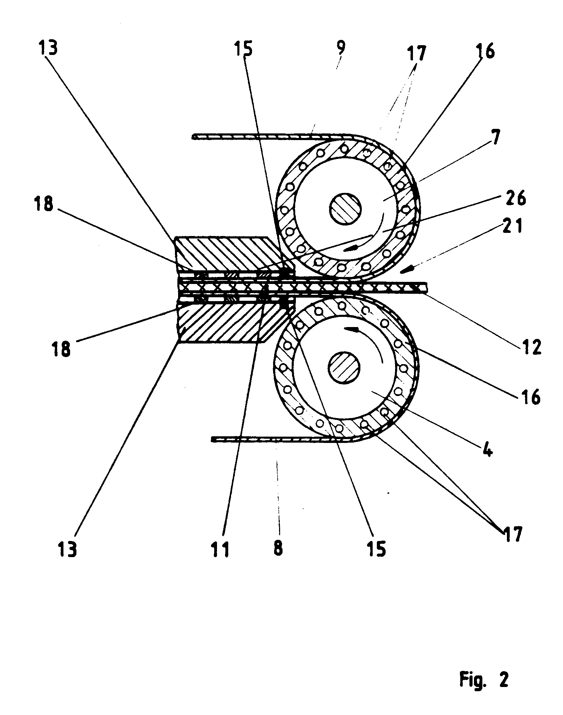

Zur Übertragung von Wärme auf die Werkstoffbahn 12 in der Reaktionszone 11 können die einlaufseitigen Umlenktrommeln 4, 7 beheizbar ausgebildet sein. Wie in Figur 2 näher zu sehen ist, sind dazu im Mantel 16 der zylinderförmigen Umlenktrommeln 4, 7 Bohrungen 17 eingebracht, durch die ein erwärmtes Wärmeträgermittel fließt. Die Wärme der einlaufseitigen Umlenktrommeln 4, 7 wird dann auf die Preßbänder 8, 9 übertragen, die die aufgenommene Wärmemenge in die Reaktionszone 11 transportieren und dort an die Werkstoffbahn 12 abgeben. Aufgrund der beschränkten Wärmekapazität der Preßbänder 8, 9 reicht die solchermaßen in die Reaktionszone 11 transportierte Warmemenge in vielen Fällen zur Aushärtung der Werkstoffbahn 12 jedoch nicht aus. Ergänzend oder alternativ zur Beheizung der einlaufseitigen Umlenktrommeln 4, 7 sind in den Druckplatten 13 wärmeleitende Elemente 18 angeordnet, mit deren Hilfe weitere Wärme in der Reaktionszone 11 auf das Preßband 8, 9 übertragen werden kann. Mit Hilfe dieser wärmeleitenden Elemente 18 ist es alternativ auch möglich, die Preßbänder 8, 9 und damit die Werkstoffbahn 12 in der Reaktionszone 11 zu kühlen.

Die Anordnung der wärmeleitenden Elemente 18 in der Druckkammer 14 ist in Figur 3 gezeigt. Die wärmeleitenden Elemente 18 haben eine kreisförmige Grundfläche und sind nebeneinander in Reihen angeordnet, die über die Breite der Druckkammer 14 verlaufen. In je zwei benachbarten Reihen sind die wärmeleitenden Elemente 18 versetzt gegeneinander angeordnet, so daß sich insgesamt eine gleichmäßige Erwärmung oder Abkühlung über die gesamte Fläche des Preßbandes ergibt.

Wie weiter der Figur 4 zu entnehmen ist, ist innerhalb der Druckkammer 14 parallel zur Druckplatte 13 eine Führungsplatte 24 angeordnet, die sowohl einen gewissen Abstand zur Druckplatte 13 als auch zum Preßband 8, 9 besitzt. Die Führungsplatte 24 ist mittels Schrauben 25 und Abstandshülsen 26 an der Druckplatte 13 befestigt und besitzt an den Stellen, an denen die wärmeleitenden Elemente 18 angeordnet sind, runde Durchgangslöcher 27, deren Durchmesser etwas größer als derjenige der wärmeleitenden Elemente 18 ist. Der Körper 31 des wärmeleitenden Elementes 18 besitzt eine zylinderförmige Gestalt mit einem an einer Seite des Körpers 31 ringsumlaufenden Rand 28, wobei der äußere Durchmesser des Randes 28 größer als der Durchmesser des Durchgangsloches 27 ist. Die wärmeleitenden Elemente 18 sind so in die Durchgangslöcher 27 der Führungsplatte 24 eingesetzt, daß der Rand 28 der Druckplatte 13 zugewandt ist. Dadurch werden die wärmeleitenden Elemente 18 an einem Herausfallen aus der Druckkammer 14 gehindert, falls das Preßband 8, 9 ausgewechselt wird.

Zwischen der Druckplatte 13 und der der Druckplatte zugewandten Seite des wärmeleitenden Elementes 18 befinden sich Federn 29, 30, die mit einem Ende an der Druckplatte 13 und mit dem anderen Ende am Körper 31 des wärmeleitenden Elementes 18 befestigt sind. Mit Hilfe der Federn 29, 30 werden die wärmeleitenden Elemente 18 mit einer Fläche 65 an das Preßband 8, 9 angelegt, das wiederum während des Betriebes der Doppelbandpresse 1 an dieser Fläche 65 der wärmeleitenden Elemente 18 entlanggleitet. Durch den Anpreßdruck der Feder 29, 30 besitzt das wärmeleitende Element 18 einen guten Wärmeleitkontakt zum Preßband 8, 9. In Figur 4 sind zwei Ausführungsformen für die Federelemente zu sehen. Bei dem in Figur 4 links angeordneten wärmeleitenden Element 18 befindet sich eine Blattfeder 29 und bei dem in Figur 4 rechts liegenden wärmeleitenden Element 18 eine Schraubenfeder 30. Falls gewünscht, können die Federn 29, 30 am Körper 31 des wärmeleitenden Elementes auch angeschweißt oder angelötet sein.

Gemäß der Erfindung ist im Körper 31 des wärmeleitenden Elementes 18 ein Mittel zur Erwärmung oder Kühlung angeordnet, so daß die im wärmeleitenden Element 18 erzeugte Wärme direkt auf das Preßband 8, 9 übertragen wird bzw. die Wärme vom Preßband 8, 9 in das wärmeleitende Element 18 aufgenommen und von dort aufgrund der Kühlung direkt abgeführt wird. Wegen des guten Wärmekontakts zwischen der am Preßband 8, 9 anliegenden Flache 65 des wärmeleitenden Elementes 18 und dem Preßband 8, 9 sowie des kurzen Weges für den Wärmestrom zwischen der Werkstoffbahn 12 und dem wärmeleitenden Element 18 ist ein geringer Wärmewiderstand vorhanden, so daß die Erwärmung oder Abkühlung der Werkstoffbahn 12 mit größtmöglicher Effektivität erfolgt.

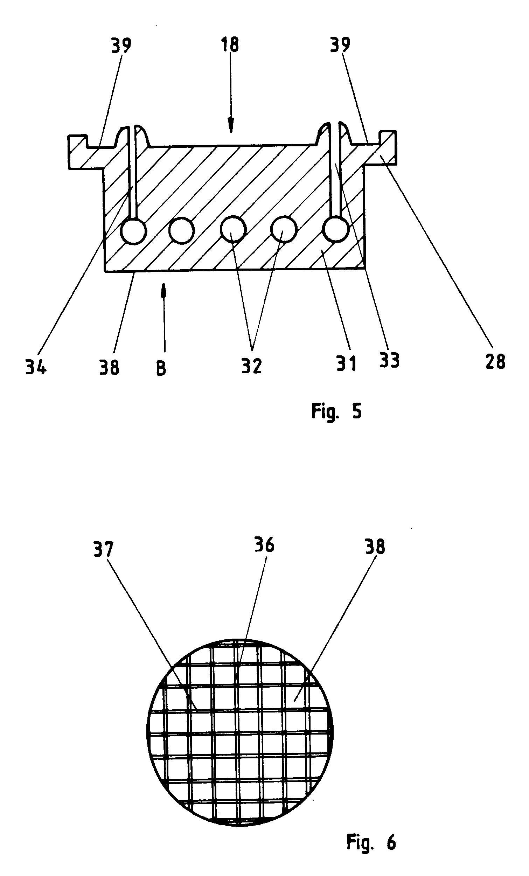

Im folgenden sollen mehrere Ausführungsformen für die wärmeleitenden Elemente anhand der Figur 5 bis 9 näher erläutert werden.

Das in Figur 5 gezeigte wärmeleitende Element besteht aus einem kompakten zylindrischen Körper 31 mit einem an der einen Seite angesetzten Rand 28. In dem zylindrischen Körper 31 sind mehrere miteinander verbundene Bohrungen 32 eingebracht. Die Bohrungen 32 sind wiederum mit einer Zuleitung 33 und Ableitung 34 verbunden, die bis zur Oberfläche des zylindrischen Körpers in der Nähe des Randes 28 reichen. Die Zuleitung 33 und Ableitung 34 sind mittels eines flexiblen Balges 35 (siehe Figur 4) mit entsprechenden Zuführungsleitungen in der Druckplatte 13 verbunden. Zwischen dem Rand 28 und der Zuleitung 33 bzw. Ableitung 34 sind Aufnahmeflächen 39 für den Ansatz der Blattfeder 29 ausgebildet.

Ein erwärmtes Wärmeträgermittel fließt durch die Zuführungsleitungen in der Druckplatte 13 über die Zuleitung 33 in den zylindrischen Körper 31, durchfließt die Bohrungen 32 und wird anschließend über die Ableitung 34 wiederum abgeführt. Dadurch wird der zylindrische Körper 31 des warmeleitenden Elementes 18 erwärmt und diese Wärme von dem Körper 31 dann über die dem Preßband 8, 9 zugewandte Oberfläche 38 an das Preßband 8, 9 abgegeben. Als erwärmtes Wärmeträgermittel eignet sich beispielsweise ein Thermoöl. Mit Hilfe der hier gezeigten Anordnung kann das Preßband 8, 9 auch gekühlt werden, indem ein gekühltes Wärmeträgermittel durch die Bohrungen 32 geleitet wird. Bei dem gekühlten Wärmeträgermittel kann es sich um Wasser oder Quecksilber handeln.

Die Oberfläche 38 des zylindrischen Körpers 31, die dem Preßband 8, 9 zugewandt ist, ist in Figur 6 in Draufsicht, aus der Richtung B entsprechend Figur 5, näher gezeigt. In diese Oberfläche 38 sind in regelmäßigen Abständen senkrecht verlaufende Furchen 36 und waagrecht verlaufende Furchen 37 eingebracht. Die Furchen 36 und 37 kreuzen sich zu einem oberflächenüberziehenden Gitter. Diese Furchen 36 und 37 bilden Kanäle für das in der Druckkammer 14 befindliche Druckmittel, so daß das Druckmittel zwischen der dem Preßband 8, 9 zugewandten Oberfläche 38 des zylindrischen Körpers 31 und der Oberfläche des Preßbandes 8, 9 eindringt und damit gleichzeitig eine Schmierwirkung für das an der Oberfläche 38 entlanggleitende Preßband 8, 9 ausübt.

Um den Wärmeübergang zwischen dem in den Bohrungen 32 fließenden Wärmeträgermittel und dem wärmeleitenden Element 18 weiter zu verbessern und damit die Effektivtät des wärmeleitenden Elements 18 weiter zu erhöhen, können die Bohrungen 32 oberflächenvergrößernde Einsätze besitzen. Solche oberflächenvergrößernde Einsätze können nach der DE-OS 37 17 649 ausgebildet sein und brauchen daher hier nicht weiter beschrieben zu werden. Eine weitere Möglichkeit die Oberfläche der Bohrungen 32 zu vergrößern, besteht darin, Rippen in diese Bohrungen einzuarbeiten.

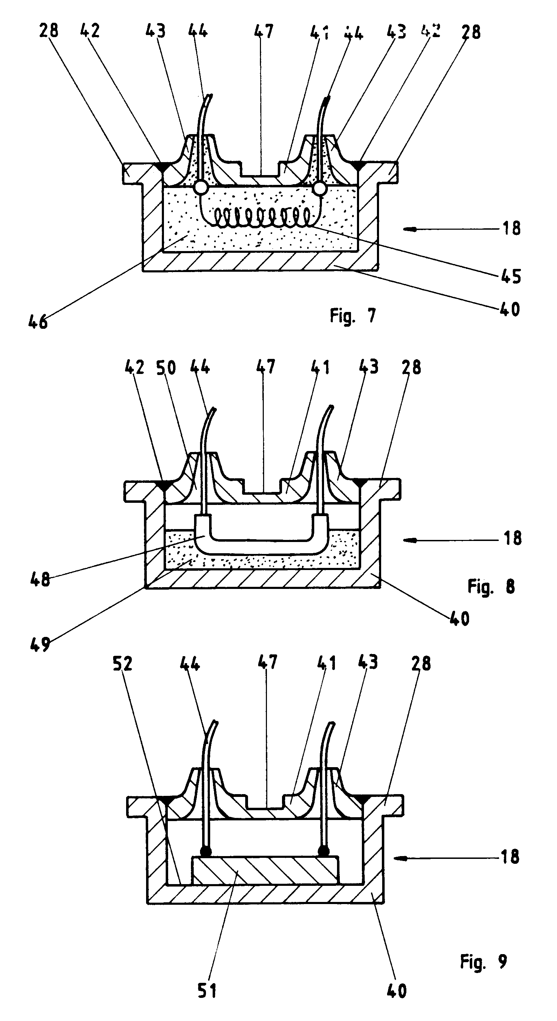

In Figur 7 ist eine andere Ausführungsform für das wärmeleitende Element 18 zu sehen. Hier besteht der Körper aus einem zylinderförmigen, hohlen Gehäuse 40, das nach einer Seite offen ist. Das Gehäuse 40 besitzt an der offenen Seite einen angesetzten Rand 28. An der offenen Seite des Gehäuses 40 ist weiter ein Deckel 41 angeordnet, der mit dem Gehäuse 40 mit Löt- oder Schweißnähten 42 verbunden ist. Im Deckel 41 ist eine Aufnahmefläche 47 für die Schraubenfeder 30 eingearbeitet (siehe dazu auch Figur 4). Der Deckel 41 besitzt weiter zwei Durchführungen 43 für elektrische Anschlüsse 44. Im Gehäuse 40 ist eine Heizspirale 45 angeordnet, die wiederum mit den in das Gehäuse 40 hineinreichenden elektrischen Anschlüssen 44 verbunden ist. Das Innere des Gehäuses 40 ist mit einer gut wärmeleitfähigen, elektrisch isolierenden Keramikmasse 46 ausgegossen, so daß die Heizspirale 45 vollständig in der Keramikmasse 46 eingebettet ist. Auch die Durchführungen 43, in denen sich die elektrischen Anschlüsse 44 befinden, sind mit einer elektrisch isolierenden Masse ausgefüllt. Bei dieser elektrisch isolierenden Masse kann es sich wiederum um Keramik oder Glas handeln. Da sämtliche stromführenden Teile 44 und 45 in einer elektrisch isolierenden Masse eingebettet sind, ist die Gefahr von Kurzschlüssen gegenüber dem Gehäuse 40 oder Deckel 41 wirkungsvoll gebannt. Die elektrischen Anschlüsse 44 sind wiederum mit entsprechenden Stromleitungen in der Druckplatte 13 gekoppelt (siehe Figur 4). Zum Schutz können die elektrischen Anschlüsse 44 in der Druckkammer 14 auch von flexiblen Bälgen 35 umgeben sein.

Wird eine elektrische Spannung an die Stromleitungen des jeweiligen wärmeleitenden Elementes 18 angelegt, so fließt ein elektrischer Strom über die Zuleitung 44 in die Heizspirale 45 und erwärmt diese. Die Wärme wird über die Keramikmasse 46 auf das Gehäuse 40 des wärmeleitenden Elementes 18 übertragen und von diesem dann an das Preßband 8, 9 weitergegeben. Besonders vorteilhaft ist bei dieser Ausführungsform, daß diese wärmeleitenden Elemente 18 sich auf höhere Temperaturen erwärmen lassen als diejenigen, die im Ausführungsbeispiel gemäß Figur 5 beschrieben sind, da die meisten Wärmeträgermittel nur bis zu bestimmten Temperaturbereichen stabil sind. Ein weiterer Vorteil ist, daß die Heizleistung der wärmeleitenden Elemente 18 leicht über den fließenden elektrischen Strom geregelt werden kann. Außerdem ist eine Erwärmung nach Bedarf möglich, indem die wärmeleitenden Elemente 18 nach Bedarf zu- oder abgeschaltet werden.

Das Gehäuse 40 und der Deckel 41 können beispielsweise aus Kupfer bestehen, das gut wärmeleitend ist. Auch eine Bronze eignet sich gut als Material für diese Teile. Es ist jedoch auch möglich, das Gehäuse 40 aus Stahl als Tiefziehteil herzustellen und die Teile anschließend zu verkupfern. Entsprechende Materialien können auch für den zylindrischen Körper 31 des wärmeleitenden Elementes der in Figur 5 beschriebenen Ausführungsform verwendet werden.

Ein elektrisch beheizbares wärmeleitendes Element 18 in einer weiteren Ausführungsform ist in Figur 8 zu sehen. Der Körper besteht wiederum wie bei dem in Figur 7 gezeigten wärmeleitenden Element 18 aus einem Gehäuse 40 und einem Deckel 41. Im Gehäuse 40 ist ein Rohrheizkörper 48 angeordnet. Dieser Rohrheizkörper ist durch Hartlot 49, das eine hohe Wärmeleitfähigkeit besitzt, mit den Innenwänden und dem Boden des Gehäuses 40 verbunden. Die elektrischen Anschlüsse 44 sind mittels Glasmasse 50 in den Durchführungen 43 isoliert. Diese Glasmasse 50 dient gleichzeitig als Sperre, um ein Eindringen des in der Druckkammer 14 befindlichen Druckmittels in das Gehäuse 40 zu verhindern.

In Figur 9 ist ein elektrisch betriebenes wärmeleitendes Element 18 gezeigt, das zur Kühlung des Preßbandes 8, 9 und damit der Werkstoffbahn 12 in der Reaktionszone 11 dient. Dieses wärmeleitende Element ist wie dasjenige in Figur 8 ausgebildet, besitzt jedoch anstelle des Rohrheizkörpers ein Peltier-Modul 51, das im Gehäuse 40 angeordnet ist. Dieses Peltier-Modul 51 liegt mit einer Fläche an der Bodenfläche 52 des Gehäuses 40 an und ist mit den elektrischen Anschlüssen 44 verbunden. Wird das wärmeleitende Element 18 eingeschaltet, so fließt Strom durch das Peltier-Modul 51 und kühlt dabei den Boden 52 und das Gehäuse 40 ab. Dadurch wird dem Preßband 8, 9, sowie der Werkstoffbahn 12 Wärme entzogen und diese somit abgekühlt.

In den Ausführungsbeispielen gemäß den Figuren 5 bis 9 besitzen die wärmeleitenden Elemente 18 einen zylindrischen Körper. Der Körper der wärmeleitenden Elemente 18 kann jedoch auch andere, zweckmäßige Formen aufweisen. Beispielsweise kann der Körper der wärmeleitenden Elemente quaderförmig oder prismatisch ausgebildet sein. Die Durchgangslöcher 27 in der Führungsplatte 24 (siehe Figur 4) besitzen dann einen etwas größeren Querschnitt als der Körper der wärmeleitenden Elemente 18. Der ringsumlaufende Rand, der sich am Körper an der der Druckplatte 13 zugewandten Seite des wärmeleitenden Elementes 18 befindet, ist wiederum etwas größer als die Öffnung des Durchgangsloches 27 ausgebildet, so daß das wärmeleitende Element 18 am Herausfallen aus der Führungsplatte gehindert ist. Insbesondere können solche quaderförmigen oder prismatischen wärmeleitenden Elemente auch über die gesamte Breite der Druckkammer 14 reichen.

Zur Vermeidung eines unerwünschten Wärmestroms zwischen der Druckplatte 13 und den wärmeleitenden Elementen 18, kann die Druckplatte 13 auch noch erwärmt oder gekühlt werden. Dies kann mit an sich bekannten Mitteln geschehen, indem die Druckplatte 13 Bohrungen besitzt, die von einem erwärmten oder gekühlten Wärmeträgermittel durchflossen werden.

Die erfindungsgemäßen wärmeleitenden Elemente lassen sich besonders vorteilhaft auch in der Übergangszone zwischen zwei Druckplatten einsetzen, wobei eine Druckplatte als Heizplatte und die andere Druckplatte als Kühlplatte ausgebildet ist.

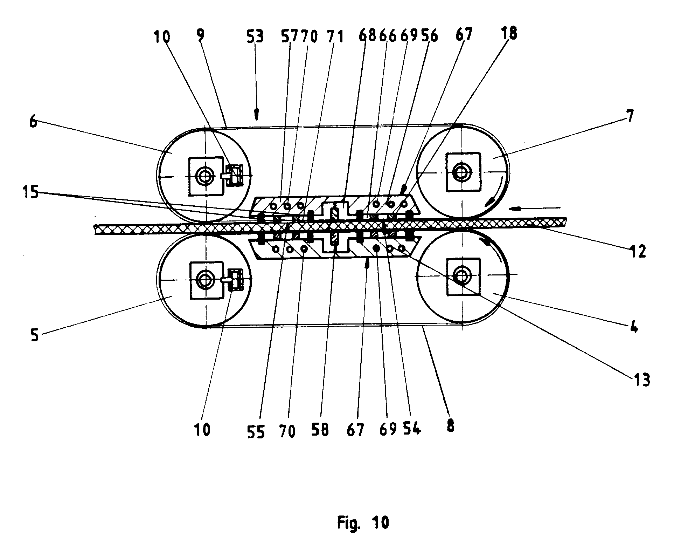

In Figur 10 ist eine mit solch einer Druckplatte 67 ausgestattete Doppelbandpresse 53 gezeigt, die eine dem Einlauf zugeordnete Heizzone 54 und eine dem Auslauf zugeordnete Kühlzone 55 besitzt. Die Druckplatte 67 der Doppelbandpresse 53 ist in eine Heizplatte 56 und in eine Kühlplatte 57 eingeteilt, wobei die Heizplatte 56 Bohrungen 69 für den Durchfluß eines erwärmten Wärmeträgermittels und die Kühlplatte 57 Bohrungen 70 für ein gekühltes Wärmeträgermittel besitzt. Sowohl in der Heizplatte 56 als auch in der Kühlplatte 57 sind ringförmig in sich geschlossene Gleitflächendichtungen 15 zur seitlichen Begrenzung zweier separater Druckkammern 66, 71 angebracht. In der Druckkammer 66 der Heizplatte 56 sind erfindungsgemäße wärmeleitende Elemente 18 zur Erwärmung des Preßbandes 8, 9 angeordnet. Weitere erfindungsgemäße wärmeleitende Elemente 18 zur Abkühlung des Preßbandes 8, 9 sind in der Druckkammer 71 der Kühlplatte 57 angeordnet. Ergänzend oder alternativ dazu können in den Druckkammern 66, 71 auch herkömmliche wärmeleitende Elemente vorhanden sein, die nach der DE-OS 33 25 578 ausgebildet sind. Durch die erfindungsgemäßen oder herkömmlichen wärmeleitenden Elemente wird dann die Werkstoffbahn 12 in der Heizzone 54 erwärmt und anschließend in der Kühlzone 55 abgekühlt.

In der Übergangszone zwischen der Heizzone 54 und der Kühlzone 55 treten beträchtliche Temperaturgradienten auf, die zu unterschiedlichen Wärmedehnungen oder -kontraktionen im Preßband 8, 9 führen. Diese Wärmedehnungen oder -kontraktionen rufen wiederum Spannungen in den Preßbändern 8, 9 hervor, die zu einem Verbeulen oder Knicken mit daraus resultierenden BeSchädigungen im Preßband 8, 9 führen können, zumindestens jedoch zu einer Beeinträchtigung der Lebensdauer der Preßbänder 8, 9. Außerdem können sich dadurch in der Oberfläche der Werkstoffbahn 12 Markierungen abzeichnen Überraschenderweise wurde gefunden, daß eine Reduzierung dieser Spannungen durch erfindungsgemäße wärmeleitende Elemente möglich ist, die in der Übergangszone zwischen der Heizzone 54 und der Kühlzone 55 angeordnet sind.

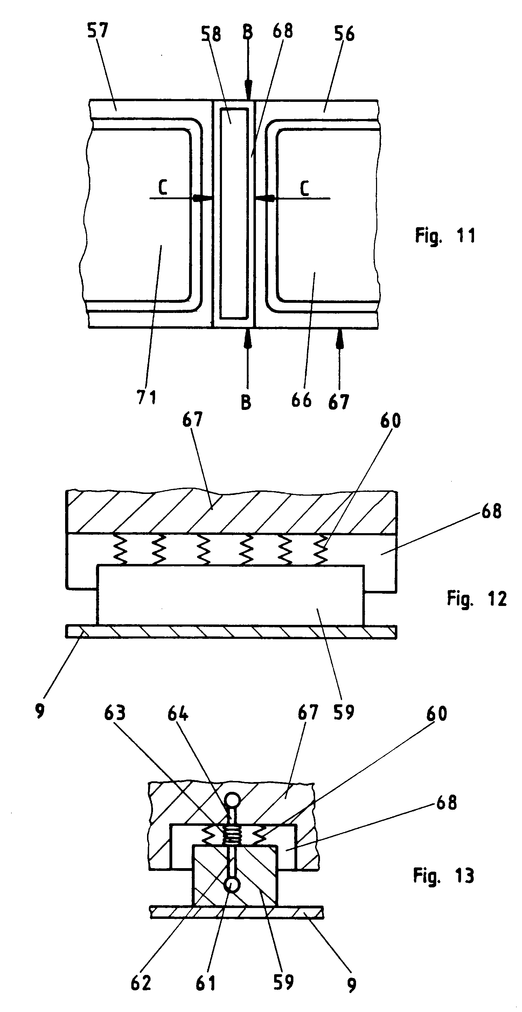

In den Figuren 11 bis 13 ist ein Ausführungsbeispiel für ein der Reduzierung von Spannungen im Preßband dienendes wärmeleitendes Element 58 zu sehen. Das wärmeleitende Element 58 ist in einer am Übergang zwischen der Heizplatte 56 und Kühlplatte 57 befindlichen Nut 68 in der Druckplatte 67 angeordnet, Es besitzt einen quader- oder stabförmigen vollflächigen Körper 59, der aus einem gut wärmeleitfähigen Material, beispielsweise Kupfer, besteht. Die Länge des quaderförmigen Körpers liegt zwischen der Breite der Druckkammern 66, 71 und der Breite der Preßbänder 8, 9, wie den Figuren 11 und 12 entnommen werden kann. Der Körper 59 wird mittels Federelementen 60, die sich an der Druckplatte 67 in der Nut 68 abstützen, an das Preßband 8, 9 angelegt.

Wie in Figur 13 gezeigt ist, befindet sich im Körper 59 wenigstens eine, in Längsrichtung des Stabes verlaufende Bohrung 61, die über Zuführkanäle 62 mit einem Wärmeträgermittel versorgt werden kann. Die Zuleitungen 62 stehen wiederum über einen flexiblen Faltenbalg 63 mit Versorgungsleitungen 64 in der Druckplatte 67 In Verbindung. Das Wärmeträgermittel wird über die Versorgungsleitungen 64 in der Druckplatte 67 und die Zuleitungen 62 der Bohrung 61 zugeführt. Je nach Erfordernis handelt es sich dabei um ein erwärmtes oder gekühltes Wärmeträgermittel, so daß dieses den Körper 59 erwärmt oder abkühlt. Dadurch wird das Preßband 8, 9 im Bereich der Nut 68, das heißt in der Übergangszone zwischen Heizzone 54 und Kühlzone 55 ebenfalls erwärmt oder abgekühlt.

Durch entsprechende Wahl der Temperatur des wärmeleitenden Elementes 58 und dem Anpreßdruck des Körpers 59 an das Preßband 8, 9 mittels der Federelemente 60 wird es erreicht, daß das Preßband 8, 9 in der Ubergangszone zwischen Heizzone 54 und Kühlzone 55 eben gehalten wird. Dadurch wird die Tendenz des Preßbandes 8, 9 vor allem aufgrund der unterschiedlichen Wärmedehnungen in der Heizzone 54 und Kühlzone 55 sich im Übergangsbereich auszubeulen und zu knicken unterbunden. Außerdem werden die in der Übergangszone im Preßband 8, 9 auftretenden Spannungen reduziert. Unter Umständen kann es sogar genügen, wenn das wärmeleitende Element 58 weder erwärmt noch gekühlt wird, sondern nur mittels der Federelemente 60 an das Preßband 8, 9 angelegt wird, um bereits eine wirksame Reduzierung der Spannungen in der Übergangszone zu erreichen.

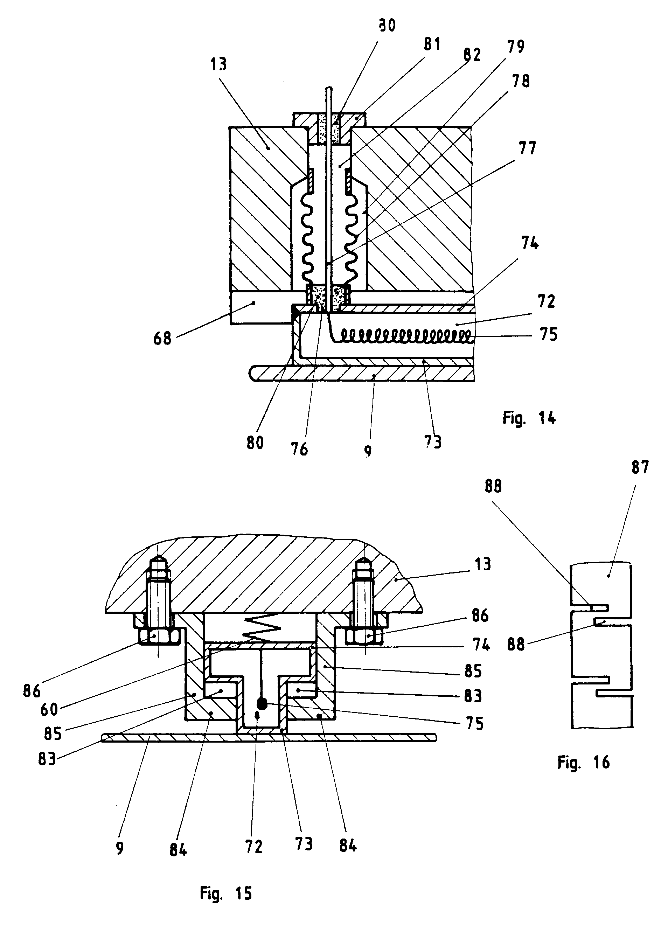

Selbstverständlich können auch die wärmeleitenden Elemente 58, die in der Übergangszone zwischen der Heizzone 54 und Kühlzone 55 angeordnet sind, mittels elektrischer Heizelemente erwärmt oder mittels Peltier-Module elektrisch gekühlt werden, wie bereits weiter oben anhand der Ausführungsbeispiele zu den wärmeleitenden Elementen 18 erläutert ist. In Figur 14 ist ein solches in der Überganszone befindliches, stabförmiges wärmeleitendes Element 72 zu sehen, das mittels einer Heizspirale elektrisch erwärmt wird.

Das wärmeleitende Element 72 besitzt ein innen hohles Gehäuse 73, das mit einem Deckel 74 abgeschlossen ist, Im Innern des Gehäuses 73 ist die Heizspirale 75 angeordnet, Die Heizspirale 75 kann wiederum in einer gut wärmeleitfähigen Keramikmasse eingebettet sein. Der Anschlußdraht 77 der Heizspirale 75 ist durch eine im Deckel 74 befindliche Durchführung 76 hindurchgeführt und wird im Innern eines Faltenbalges 78 weitergeleitet. Der Faltenbalg 78 ist mit einer Seite am Deckel 74 bei der Durchführung 76 befestigt. Die Durchführung 76 selbst kann wiederum mittels einer Glasmasse 80 zur elektrischen Isolation ausgegossen sein, Der Faltenbalg 78 verläuft in einer Nut 79 in der Druckplatte 13 und ist mit seinem anderen Ende an der dem Preßband 8, 9 abgewandten Seite der Druckplatte 13 in der Nut 79 befestigt. Die Nut 79 mündet an der dem Preßband 8, 9 abgewandten Seite in eine Bohrung 82, die durch die Druckplatte 13 hindurchreicht. Die Bohrung 82 ist mittels eines Stopfens 81 verschlossen, durch den wiederum der Anschlußdraht 77 abgedichtet mittels Glasmasse 80 hindurchreicht. Der Anschlußdraht 77 wird dann außernalb der Druckplatte mit der Spannungsquelle verbunden. Der Faltenbalg 78 dient dem Schutz und der Abdichtung des Anschlußdrahtes 77.

Die Halterung und Führung für das wärmeleitende Element 72 ist näher in Figur 15 zu sehen. An der dem Preßband 8, 9 zugewandten Seite besitzt das wärmeleitende Element 72 an jeder Seite einen Einschnitt 83. In diesen Einschnitt 83 greift der Zapfen 84 einer S-förmigen Halterung 85 ein. Das andere Ende der S-förmigen Halterung 85 ist mittels Schrauben 86 an der Druckplatte 13 befestigt. Durch die Zapfen 84 wird das wärmeleitende Element 72 geführt. Der Einschnitt 83 sorgt für eine Bewegungsfreiheit des wärmeleitenden Elementes 72 in vertikaler Richtung, so daß dieses mittels der Federelemente 60 unter allen Betriebsbedingungen an das Preßband 8, 9 angelegt werden kann.

Die wärmeleitenden Elemente werden vorzugsweise in den oberen und unteren Druckplatten einander gegenüberliegend angeordnet (siehe dazu auch Figur 2 oder 10). Insbesondere wenn es sich um längliche, stabförmige wärmeleitende Elemente handelt, sind diese in Längsrichtung relativ starr, so daß diese bei Dickenschwankungen über die Preßbandbreite, die durch Ungenauigkeiten im Preßband oder auch im Preßgut hervorgerufen werden, nicht nachgeben. Dies führt wiederum zu einer erhöhten Reibbelastung zwischen Preßband und dem wärmeleitenden Element. Um solche punktförmigen Ungenauigkeiten ausgleichen zu können, kann vorgesehen sein, daß wenigstens eines der einander gegenüberliegenden wärmeleitenden Elemente flexibel ausgestaltet ist. In Figur 16 ist solch ein flexibles, stabförmiges wärmeleitendes Element 87 in Draufsicht näher gezeigt. Dieses wärmeleitende Element 87 besitzt in gewissen Abständen beidseitige Einschnitte 88. Diese Einschnitte 88 vermindern die Steifheit des wärmeleitenden Elementes 87 in Längsrichtung, so daß dieses sich punktförmigen Dickenschwankungen in der Querrichtung des Preßbandes 8, 9 flexibel anpassen kann. Dadurch wird vorteilhafterweise erreicht, daß keine erhöhte, zu einer Zerstörung des Preßbandes 8, 9 führende Belastung auftritt.

Bei besonders steilen Temperaturgradienten oder bei weiten Übergangszonen zwischen der Heizzone 54 und der Kühlzone 55 kann unter Umständen ein einziges stabförmiges wärmeleitendes Element nicht ausreichen, um die im Preßband auftretenden Spannungen zu reduzieren. In einem solchen Fall können mehrere stabförmige wärmeleitende Elemente hintereinander in Vorlaufrichtung des Preßbandes gesehen in der Übergangszone angeordnet werden.

Solche der Reduzierung der Spannungen im Preßband dienenden wärmeleitenden Elemente können erfindungsgemäß in allen Zonen angeordnet werden, wo ein Temperaturgradient auftritt. Dies kann insbesondere auch im Einlaufbereich der Doppelbandpresse 1, 53 der Fall sein, wo das abgekühlte Preßband 8, 9 in die Heizzone 54 einläuft.

Mit Hilfe der erfindungsgemäßen wärmeleitanden Elemente wird eine Verringerung der Wärmewiderstände und damit eine verbesserte Erwärmung oder Kühlung des Preßbandes erzielt. Durch die beschriebene vorteilhafte Ausgestaltung der Erfindung, mit deren Hilfe Spannungen reduziert sowie Knickungen und Beulen im Preßband vermieden werden, wird weiter die Lebensdauer des Preßbandes erhöht. Als weiterer Vorteil ergibt sich, daß man eine weitaus besser maßhaltige Werkstoffbahn als mit bisherigen Doppelbandpressen erhält.

## Patentansprüche

1. Kontinuierlich arbeitende Doppelbandpresse zur Herstellung von Laminaten, Span- oder Faserplatten, Sperrholz oder dergleichen, die ein oberes und ein unteres, über jeweils zwei in einem starren Pressengestell (11) drehbar gelagerten Umlenktrommeln (4, 7) geführtes, endloses Preßband (8, 9) besitzt, auf deren Innenseiten ein mit fluiden Mitteln in Druckkammern (14) erzeugter Druck einwirkt, diese Druckkammern (14) in vertikaler Richtung von im Pressengestell (11) befestigten Druckplatten (13) und den Preßbändern und in horizontaler Richtung von Gleitflächendichtungen (15) begrenzt sind, mit in der Druckkammer (14) angeordneten wärmeleitenden Elementen, die mit den Druckplatten (13) in Verbindung stehen und mit einer Fläche an die Innenseite des Preßbandes (8, 9) angepreßt werden, so daß die Innenseite des Preßbandes (8, 9) an dieser Fläche entlanggleitet, **dadurch gekennzeichnet,** daß das wärmeleitende Element (18) einen Körper (31) besitzt, in dem Mittel zur Erwärmung oder Kühlung des wärmeleitenden Elementes (18) angeordnet sind.

2. Doppelbandpresse nach Patentanspruch 1, **dadurch gekennzeichnet,** daß das wärmeleitende Element (18) zylinderförmig ausgebildet ist.

3. Doppelbandpresse nach Patentanspruch 1, **dadurch gekennzeichnet,** daß das wärmeleitende Element (18) quaderförmig ausgebildet ist.

4. Doppelbandpresse nach Patentanspruch 1, **dadurch gekennzeichnet,** daß das wärmeleitende Element (18) prismatisch ausgebildet ist.

5. Doppelbandpresse nach einem der Patentansprüche 1 bis 4, **dadurch gekennzeichnet,** daß in der Druckkammer (14) parallel zur Druckplatte (13) eine Führungsplatte (24) mit Abstand zur Druckplatte (13) und zum Preßband (8, 9) angeordnet ist, in der sich Durchgangslöcher (27) mit einem größeren Querschnitt als derjenige des Körpers (31) der wärmeleitenden Elemente (18) befinden, der Körper (31) der wärmeleitenden Elemente (18) an der der Druckplatte (13) zugewandten Seite einen ringsumlaufenden Rand (28) besitzt, der größer als die Öffnung des Durchgangsloches (27) ist, und die wärmeleitenden Elemente (18) sich in diesen Durchgangslöchern (27) befinden, wobei sie durch den Rand (28) am Herausfallen gehindert werden.

6. Doppelbandpresse nach einem der Patentansprüche 1 bis 5, **dadurch gekennzeichnet,** daß die wärmeleitenden Elemente (18) mit Federn (29, 30) an das Preßband (8, 9) angepreßt werden.

7. Doppelbandpresse nach Patentanspruch 6, **dadurch gekennzeichnet,** daß ein Ende der Feder (29, 30) an der Druckplatte (13) und das andere Ende am wärmeleitenden Element (18) befestigt ist.

8. Doppelbandpresse nach Patentanspruch 7, **dadurch gekennzeichnet,** daß der Körper (31) des wärmeleitenden Elementes (18) Aufnahmeflächen (39, 47) für die Feder (29, 30) besitzt.

9. Doppelbandpresse nach Patentanspruch 7 oder 8, **dadurch gekennzeichnet,** daß die Feder (29, 30) am Körper (31) des wärmeleitenden Elements (18) angeschweißt oder angelötet ist.

10. Doppelbandpresse nach einem der Patentansprüche 6 bis 9, **dadurch gekennzeichnet,** daß es sich bei der Feder um eine Schraubenfeder (30) handelt.

11. Doppelbandpresse nach einem der Patentansprüche 6 bis 9, **dadurch gekennzeichnet,** daß es sich bei der Feder um eine Blattfeder (29) handelt.

12. Doppelbandpresse nach einem der Patentansprüche 1 bis 11, **dadurch gekennzeichnet,** daß das wärmeleitende Element (18) aus Kupfer besteht.

13. Doppelbandpresse nach einem der Patentansprüche 1 bis 11, **dadurch gekennzeichnet,** daß das wärmeleitende Element (18) aus Bronze besteht.

14. Doppelbandpresse nach einem der Patentansprüche 1 bis 13, **dadurch gekennzeichnet,** daß die dem Preßband (8, 9) zugewandte Oberfläche (38) des Körpers (31) des wärmeleitenden Elementes (18) ein Gitter aus senkrecht verlaufenden Furchen (36) und waagrecht verlaufenden Furchen (37) besitzt.

15. Doppelbandpresse nach einem der Patentansprüche 1 bis 14, **dadurch gekennzeichnet,** daß das Mittel zur Erwärmung des wärmeleitenden Elementes (18) aus Bohrungen (32) im Körper (31) des wärmeleitenden Elementes (18) besteht, die von einem erwärmten Wärmeträgermittel durchflossen werden.

16. Doppelbandpresse nach Patentanspruch 15, **dadurch gekennzeichnet,** daß es sich bei dem erwärmten Wärmeträgermittel um ein Thermoöl handelt.

17. Doppelbandpresse nach einem der Patentansprüche 1 bis 14, **dadurch gekennzeichnet,** daß es sich bei dem Mittel zur Kühlung des wärmeleitenden Elementes (18) um Bohrungen (32) im Körper (31) des wärmeleitenden Elementes (18) handelt, die von einem gekühlten Wärmeträgermittel durchflossen werden.

18. Doppelbandpresse nach Patentanspruch 17, **dadurch gekennzeichnet,** daß es sich bei dem gekühlten Wärmeträgermittel um Wasser handelt.

19. Doppelbandpresse nach Patentanspruch 17, **dadurch gekennzeichnet,** daß es sich bei dem gekühlten Wärmeträgermittel um Quecksilber handelt.

20. Doppelbandpresse nach einem der Patentansprüche 15 bis 19, **dadurch gekennzeichnet,** daß die Bohrungen (32) mit einer Zuleitung (33) und Ableitung (34) für das Wärmeträgermittel verbunden sind, die bis zur Oberfläche des Körpers (31) reichen und diese Zuleitung (33) und Ableitung (34) wiederum mittels eines flexiblen Balges (35) mit Zuführungsleitungen in der Druckplatte (13) verbunden sind.

21. Doppelbandpresse nach einem der Patentansprüche 15 bis 20, **dadurch gekennzeichnet,** daß die Oberfläche der Bohrungen (32) durch Rippen vergrößert ist.

22. Doppelbandpresse nach einem der Patentansprüche 15 bis 20, **dadurch gekennzeichnet,** daß die Bohrungen (32) mit oberflächenvergrößernden Einsätzen versehen sind.

23. Doppelbandpresse nach einem der Patentansprüche 1 bis 14, **dadurch gekennzeichnet,** daß die Mittel zur Erwärmung des wärmeleitenden Elementes (18) aus im Körper (31) befindlichen elektrischen Heizelementen bestehen.

24. Doppelbandpresse nach Patentanspruch 23, **dadurch gekennzeichnet,** daß das elektrische Heizelement aus einer Heizspirale (45) besteht.

25. Doppelbandpresse nach Patentanspruch 23, **dadurch gekennzeichnet,** daß das elektrische Heizelement aus einem Rohrheizkörper (48) besteht.

26. Vorrichtung nach einem der Patentansprüche 1 bis 14, **dadurch gekennzeichnet,** daß es sich bei dem Mittel zur Kühlung des wärmeleitenden Elementes (18) um ein im Körper (31) befindliches Peltier-Modul (51) handelt.

27. Doppelbandpresse nach einem der Patentansprüche 23 bis 26, **dadurch gekennzeichnet,** daß der Körper des wärmeleitenden Elementes (18) aus einem zylinderförmigen, hohlem Gehäuse (40) besteht, wobei das Gehäuse (40) an einem Ende offen ist, an dieser offenen Seite des Gehäuses (40) ein Deckel (41) angeordnet ist und sich im Innern des Gehäuses (40) das elektrische Heizelement oder das Peltier-Modul (51) befindet.

28. Doppelbandpresse nach Patentanspruch 27, **dadurch gekennzeichnet,** daß das Gehäuse (40) mit dem Deckel (41) verschweißt ist.

29. Doppelbandpresse nach Patentanspruch 27, **dadurch gekennzeichnet,** daß das Gehäuse (40) mit dem Deckel (41) verlötet ist.

30. Doppelbandpresse nach Patentanspruch 27, 28 oder 29, **dadurch gekennzeichnet,** daß im Deckel (41) Durchführungen (43) für elektrische Anschlüsse (44) für das elektrische Heizelement oder das Peltier-Modul (51) vorgesehen sind und diese Durchführungen (43) mit einer elektrisch isolierenden Masse ausgefüllt sind.

31. Doppelbandpresse nach Patentanspruch 30, **dadurch gekennzeichnet,** daß es sich bei der elektrisch isolierenden Masse um Glas handelt.

32. Doppelbandpresse nach Patentanspruch 30, **dadurch gekennzeichnet,** daß es sich bei der elektrisch isolierenden Masse um Keramik handelt.

33. Doppelbandpresse nach einem der Patentansprüche 30 bis 32, **dadurch gekennzeichnet,** daß die elektrischen Anschlüsse (44) mit Stromleitungen in der Druckplatte (13) gekoppelt sind und diese elektrischen Anschlüsse (44) zwischen der Druckplatte (13) und der Durchführung (43) in einem Faltenbalg (35) verlaufen.

34. Doppelbandpresse nach einem der Patentansprüche 24 und 27 bis 33, **dadurch gekennzeichnet,** daß die elektrische Heizspirale (45) vollständig in einer gut wärmeleitfähigen Keramikmasse (46) eingebettet ist, die sich im Innern des Gehäuses (40) befindet.

35. Doppelbandpresse nach einem der Patentansprüche 25 und 27 bis 32, **dadurch gekennzeichnet,** daß der Rohrheizkörper (48) mit den Innenwänden und dem Boden des Gehäuses (40) mit Hartlot (49) mit hoher Wärmeleitfähigkeit verbunden ist.

36. Doppelbandpresse nach einem der Patentansprüche 26 bis 33, **dadurch gekennzeichnet,** daß das Peltier-Modul (51) mit einer Fläche an der Bodenfläche (52) des Gehäuses (40) anliegt.

37. Doppelbandpresse nach einem der Patentansprüche 27 bis 36, **dadurch gekennzeichnet,** daß das Gehäuse (40) als Tiefziehteil aus Stahl ausgebildet ist und dessen Oberflächen verkupfert sind.

38. Doppelbandpresse nach einem der Patentansprüche 1 bis 37, **dadurchgekennzeichnet,** daß die Druckplatte (13) zusätzlich erwärmt oder gekühlt wird.

39. Doppelbandpresse nach einem der Patentansprüche 1 bis 38, **dadurch gekennzeichnet,** daß die Druckplatte (67) in der Doppelbandpresse (53) in eine Heizplatte (56) und Kühlplatte (57) geteilt ist, so daß die Doppelbandpresse (53) eine Heizzone (54) und eine Kühlzone (55) besitzt, daß sich in der Übergangszone zwischen der Heizzone (54) und Kühlzone (55) eine Nut (68) in der Druckplatte (67) befindet, in dieser Nut (68) wenigstens ein wärmeleitendes Element (58, 72) angeordnet ist, und dieses wärmeleitende Element (58, 72) an das Preßband (8, 9) angelegt wird, so daß im Preßband (8, 9) in der Übergangszone auftretende Spannungen reduziert werden.

40. Doppelbandpresse nach Patentanspruch 39, **dadurch gekennzeichnet,** daß das wärmeleitende Element (58, 72) beheizbar ausgebildet ist.

41. Doppelbandpresse nach Patentanspruch 39, **dadurch gekennzeichnet,** daß das wärmeleitende Element (58, 72) kühlbar ausgebildet ist.

42. Doppelbandpresse nach einem der Patentansprüche 39 bis 41, **dadurch gekennzeichnet,** daß das wärmeleitende Element (58, 72) mittels Federelemente (60) an das Preßband (8, 9) angelegt wird.

43. Doppelbandpresse nach einem der Patentansprüche 39 bis 42, **dadurch gekennzeichnet,** daß das wärmeleitende Element (58, 72) quader- oder stabförmig ausgebildet ist.

44. Doppelbandpresse nach Patentanspruch 43, **dadurch gekennzeichnet,** daß das quader- bzw. stabförmige wärmeleitende Element (58, 72) eine Länge besitzt, die zwischen der Breite der Druckkammern (66, 71) und der Breite der Preßbänder (8, 9) liegt.

45. Doppelbandpresse nach einem der Patentansprüche 39 bis 44, **dadurch gekennzeichnet,** daß das wärmeleitende Element (72) an der dem Preßband (8, 9) zugewandten Seite Einschnitte (83) besitzt, in diesen Einschnitt (83) ein Zapfen (84) einer S-förmigen Halterung (85) eingreift und das andere Ende der S-förmigen Halterung (85) mittels Schrauben (86) an der Druckplatte (13) befestigt ist, so daß das wärmeleitende Element (72) in vertikaler Richtung beweglich und von der S-förmigen Halterung (85) geführt ist.

46. Doppelbandpresse nach einem der Patentansprüche 39 bis 45, **dadurch gekennzeichnet,** daß das elektrisch beheizbare wärmeleitende Element (72) eine Durchführung (76) für den Anschlußdraht (77) besitzt, an dieser Durchführung (76) das eine Ende eines Faltenbalges (78) befestigt ist, in dem der Anschlußdraht (77) weitergeleitet ist, der Faltenbalg (78) in einer Nut (79) in der Druckplatte (13) verläuft, das andere Ende des Faltenbalges (78) an der dem Preßband (8, 9) abgewandten Seite am Ende der Nut (79) befestigt ist, die Nut (79) an diesem Ende in eine durch die Druckplatte (13) durchgehende Bohrung (82) mündet, die Bohrung (82) mittels eines Stopfens (81) verschlossen ist, der Anschlußdraht (77) vom Faltenbalg (78) durch den Stopfen (81) hindurchgeht und die Durchgangsstellen im Stopfen (81) und der Durchführung (76) für den Anschlußdraht (77) mittels einer elektrisch isolierenden Glasmasse abgedichtet sind.

47. Doppelbandpresse nach einem der Patentansprüche 39 bis 46, **dadurch gekennzeichnet,** daß in den Zonen, in denen Temperaturgradienten auftreten, zusätzliche wärmeleitende Elemente (58, 72) angeordnet sind.

48. Doppelbandpresse nach Patentanspruch 47, **dadurch gekennzeichnet,** daß zusätzliche wärmeleitende Elemente (58, 72) in der Einlaufzone in die Doppelbandpresse (1, 53) angeordnet sind, wo das Preßband (8, 9) in die Heizzone (54) einläuft.

49. Doppelbandpresse nach einem der Patentansprüche 39 bis 48, **dadurch gekennzeichnet,** daß mehrere wärmeleitende Elemente (58, 72) in der Übergangszone in Vorlaufrichtung des Preßbandes (8, 9) gesehen hintereinander angeordnet sind.

50. Doppelbandpresse nach einem der Patentansprüche 1 bis 49, **dadurch gekennzeichnet,** daß das stabförmige wärmeleitende Element (87) mehrere seitliche Einschnitte (88) besitzt, um eine Flexibilität in Längsrichtung zu erreichen.

## Claims

1. Continuously operating double-band press for the production of laminates, plates of chipboard or fibreboard, plywood or the like and comprising an upper and a lower press band (8, 9), which are each guided by way of two respective deflecting drums (4, 7) borne to be rotatable in a rigid press frame (11) and on the inward sides of which acts a pressure produced by fluid media in pressure chambers (14), these pressure chambers (14) are bounded in vertical direction by pressure plates (13) fastened in the press frame (11) and in horizontal direction by sliding surface seals (15), with thermally conducting elements, which are arranged in the pressure chamber (14), stand in connection with the pressure plates (13) and are urged by one surface against the inward side of the press band (8, 9) so that the inward side of the press band (8, 9) slides along this surface, characterised thereby, that the thermally conducting element (18) comprises a body (31), in which means for the heating of cooling of the thermally conducting element (18) are arranged.

2. Double-band press according to claim 1, characterised thereby, that the thermally conducting element (18) is constructed in cylindrical shape.

3. Double-band press according to claim 1, characterised thereby, that the thermally conducting element (18) is constructed in parallelepipedonal shape.

4. Double-band press according to claim 1, characterised thereby, that the thermally conducting element (18) is constructed in prismatic shape.

5. Double-band press according to one of the claims 1 to 4, characterised thereby, that a guide plate (24), in which passage holes (27) of a greater cross-section than that of the body (31) of the thermally conducting elements (18) are disposed, is arranged at a spacing from the pressure plate (13) and from the press band (8, 9) parallelly to the pressure plate (13) in the pressure chamber (14), the body (31) of the thermally conducting elements (18) at the side facing the pressure plate (13) has an encircling rim (28), which is greater than the opening of the passage hole (27), and the thermally conducting elements (18) are disposed in these passage holes (27), whilst being prevented from falling out by the rim (28).

6. Double-band press according to one of the claims 1 to 5, characterised thereby, that the thermally conducting elements (18) are urged against the press band (8, 9) by springs (29, 30).

7. Double-band press according to claim 6, characterised thereby, that one end of the spring (29, 30) is fastened at the pressure plate (13) and the other at the thermally conducting element (18).

8. Double-band press according to claim 7, characterised thereby, that the body of the thermally conducting element (18) comprises receptacle surfaces (39, 47) for the spring (29, 30).

9. Double-band press according to claim 7 or 8, characterised thereby, that the spring (29, 30) is welded or soldered to the body of the thermally conducting element (18).

10. Double-band press according to one of the claims 6 to 9, characterised thereby, that a helical spring (30) is concerned in the case of the spring.

11. Double-band press according to one of the claims 6 to 9, characterised thereby, that a leaf spring (29) is concerned in the case of the spring.

12. Double-band press according to one of the claims 1 to 11, characterised thereby, that the thermally conducting element (18) consists of copper.

13. Double-band press according to one of the claims 1 to 11, characterised thereby, that the thermally conducting element (18) consists of bronze.

14. Double-band press according to one of the claims 1 to 13, characterised thereby, that that side of the body (31) of the thermally conducting element (18), which faces the press band (8, 9), comprises a grating of vertically extending furrows (36) and horizontally extending furrows (37).

15. Double-band press according to one of the claims 1 to 14, characterised thereby, that the means for the heating of the thermally conducting element (18) consist of bores (32) in the body (31) of the thermally conducting element (18), which are flowed through by a heated heat carrier medium.

16. Double-band press according to claim 15, characterised thereby, that a thermal oil is concerned in the case of the heated heat carrier medium.

17. Double-band press according to one of the claims 1 to 14, characterised thereby, that bores (32) in the body (31) of the thermally conducting element (18), which are flowed through by a cooled heat carrier medium, are concerned in the case of the means for the cooling of the thermally conducting element (18).

18. Double-band press according to claim 17, characterised thereby, that water is concerned in the case of the cooled heat carrier medium.

19. Double-band press according to claim 17, characterised thereby, that mercury is concerned in the case of the cooled heat carrier medium.

20. Double-band press according to one of the claims 15 to 19, characterised thereby, that the bores (32) are connected with an inlet duct (33) and an outlet duct (34) for the heat carrier medium, which ducts reach to the surface of the body (31) and this inlet duct (33) and outlet duct (34) are in turn connected with feed ducts in the pressure plate (13) by means of a flexible bellows (35).

21. Double-band press according to one of the claims 15 to 20, characterised thereby, that the surface of the bores (32) is increased by ribs.

22. Double-band press according to one of the claims 15 to 20, characterised thereby, that the bores (32) are provided with surface-increasing inserts.

23. Double-band press according to one of the claims 1 to 14, characterised thereby, that the means for the heating of the thermally conducting element (18) consist of electrical heating elements disposed in the body (3).

24. Double-band press according to claim 23, characterised thereby, that the electrical heating element consists of a heating coil (45).

25. Double-band press according to claim 23, characterised thereby, that the electrical heating element consists of a tubular heater (48).

26. Double-band press according to one of the claims 1 to 14, characterised thereby, that a Peltier module (51) disposed in the body (31) is concerned in the case of the means for the cooling of the thermally conducting element (18).

27. Double-band press according to one of the claims 23 to 26, characterised thereby, that the body of the thermally conducting element (18) consists of a hollow cylindrical housing (40), wherein the housing (40) is open at one end, a cover (41) is arranged at this open side of the housing (40) and the electrical heating element or the Peltier module (51) is disposed in the interior of the housing (40).

28. Double-band press according to claim 27, characterised thereby, that the housing (40) is welded together with the cover (41).

29. Double-band press according to claim 27, characterised thereby, that the housing (40) is soldered together with the cover (41).

30. Double-band press according to claim 27, 28 or 29, characterised thereby, that passages (43) for electrical connections (44) for the electrical heating element or the Peltier module (51) are provided in the cover (41) and these passages (43) are filled out by an electrically insulating mass.

31. Double-band press according to claim 30, characterised thereby, that glass is concerned in the case of the electrically insulating mass.

32. Double-band press according to claim 31, characterised thereby, that ceramic material is concerned in the case of the electrically insulating mass.

33. Double-band press according to one of the claims 30 to 32, characterised thereby, that the electrical connections (44) are coupled with current conductors in the pressure plate (13) and these electrical connections (44) extend in a flexible bellows (35) between the pressure plate (13) and the passage (43).

34. Double-band press according to one of the claims 24 and 27 to 33, characterised thereby, that the electrical heating coil (45) is completely embedded in a ceramic mass (46), which is of high thermal conductivity and disposed in the interior of the housing (40).

35. Double-band press according to one of the claims 25 and 27 to 32, characterised thereby, that the tubular heater (48) is connected with the inward walls and the base of the housing (40) by hard solder (49) of high thermal conductivity.

36. Double-band press according to one of the claims 26 to 33, characterised thereby, that the Peltier module (51) lies by one surface against the base surface of the housing (40).

37. Double-band press according to one of the claims 27 to 36, characterised thereby, that the housing (40) is formed as deep-drawn part of steel and its surfaces are copper-plated.

38. Double-band press according to one of the claims 1 to 37, characterised thereby, that the pressure plate (13) is heated or cooled additionally.

39. Double-band press according to one of the claims 1 to 38, characterised thereby, that the pressure plate (67) in the double-band press (53) is divided into a heating plate (56) and a cooling plate (57) so that the double-band press (53) comprises a heating zone (54) and a cooling zone (55), that a groove (68) is disposed in the pressure plate (67) in the transition zone between the heating zone (54) and the cooling zone (55), at least one thermally conducting element (58, 72) is arranged in this groove (68) and this thermally conducting element (58, 72) is laid against the press band (8, 9) so that stresses arising in the transition zone are reduced in the press band (8, 9).

40. Double-band press according to claim 39, characterised thereby, that the thermally conducting element (58, 72) is constructed to be heatable.

41. Double-band press according to claim 39, characterised thereby, that the thermally conducting element (58, 72) is constructed to be coolable.

42. Double-band press according to one of the claims 39 to 41, characterised thereby, that the thermally conducting element (58, 72) is laid against the press band (8, 9) by means of spring elements (60).

43. Double-band press according to one of the claims 39 to 42, characterised thereby, that the thermally conducting element (58, 72) is constructed in parallelepipedonal or rod shape.

44. Double-band press according to claim 43, characterised thereby, that the thermally conducting element (58, 72) of parallelepipedonal or rod shape has a length which lies between the width of the press bands (8, 9) and the width of the pressure chambers (66, 71).

45. Double-band press according to one of the claims 39 to 44, characterised thereby, that the thermally conducting element (58, 72) has indentations (83) at the side facing the press band (8, 9), a spigot (84) of an S-shaped mounting (85) engages into this indentation (83) and the other end of the S-shaped mounting (85) is fastened at the pressure plate (13) by means of screws (86) so that the thermally conducting element (58, 72) is movable in vertical direction and guided by the S-shaped mounting (85).

46. Double-band press according to one of the claims 39 to 45, characterised thereby, that the electrically heatable thermally conducting element (72) has a passage (76) for the connecting wire (77), the one end of a flexible bellows (78), in which the connecting wire (77) is led further, is fastened at this passage (76), the flexible bellows (78) extends in a groove (79) in the pressure plate (13), the other end of the flexible bellows (78) is fastened at the end of the groove (79) at the side remote from the press band (8, 9), the groove (79) at this end opens into a bore (82) penetrating the pressure plate (13), the bore (82) is closed by means of a plug (81), the connecting wire (77) passes from the flexible bellows (78) through the plug (81) and the passage places in the plug (81) and the passage (76) for the connecting wire (77) are sealed off by means of an electrically insulating body of glass.

47. Double-band press according to one of the claims 39 to 46, characterised thereby, that additional thermally conducting elements (58, 72) are arranged in the zones in which temperature gradients arise.

48. Double-band press according to claim 47, characterised thereby, that additional thermally conducting elements (58, 72) are arranged in the inlet zone into the double-band press (1, 53), where the press band (8, 9) runs into the heating zone (54).

49. Double-band press according to one of the claims 39 to 48, characterised thereby, that several thermally conducting elements (58, 72) are arranged one behind the other, as seen in the direction of advance of the press band (8, 9), in the transition zone.

50. Double-band press according to one of the claims 1 to 49, characterised thereby, that the rod-shaped thermally conducting element (87) has several lateral indentations (88) in order to achieve a flexibility in longitudinal direction.

## Revendications

1. Presse à double bande travaillant en continu pour fabriquer des produits stratifiés, des plaques de fibres ou des plaques agglomérées, du contre-plaqué ou produits analogues, cette presse ayant une bande de presse (8, 9) sans fin, supérieure et inférieure, passant chaque fois sur deux tambours de renvoi (4, 7) montés à rotation dans un bâti de presse (11) rigide, bande de presse dont les faces intérieures sont soumises à une pression créée par des fluides dans des chambres de pression (14), ces chambres de pression (14) étant délimitées dans la direction verticale par des plaques de pression (13) fixées au bâti (11) de la presse et par les bandes de presse, ces chambres étant délimitées dans la direction horizontale par des joints coulissants (15), ces chambres de pression (14) recevant des éléments conducteurs de chaleur en liaison avec les plaques de pression (13) et une face de ces éléments étant pressée contre la face intérieure de la bande de presse (8, 9) de façon que cette face intérieure de la bande de presse (8, 9) glisse le long de cette surface, presse caractérisée en ce que l'élément conducteur de chaleur (18) possède un corps (31) muni de moyens de chauffage ou de refroidissement de l'élément conducteur de chaleur (18).

2. Presse à double bande selon la revendication 1, caractérisée en ce que l'élément conducteur de chaleur (18) est de forme cylindrique.

3. Presse à double bande selon la revendication 1, caractérisée en ce que l'élément conducteur de chaleur (18) est de forme rectangulaire.

4. Presse à double bande selon la revendication 1, caractérisée en ce que l'élément conducteur de chaleur (18) est de forme prismatique.

5. Presse à double bande selon l'une des revendications 1 à 4, caractérisée en ce que la chambre de pression (14), parallèlement à la plaque de pression (13), comporte une plaque de guidage (24) à une certaine distance de la plaque de pression (13) et de la bande de presse (8, 9), cette plaque étant munie d'orifices de passage (27) de section plus grande que la section des corps (31) des éléments conducteurs de chaleur (18), le corps (31) des éléments conducteurs de chaleur (18) ayant sur sa face tournée vers la plaque de pression (13), une collerette périphérique (28) de dimension plus grande que l'ouverture de l'orifice traversant (27) et les éléments conducteurs de chaleur (18) se trouvant logés dans les orifices de passage (27), la collerette (28) évitant qu'ils ne puissent en tomber.

6. Presse à double bande selon l'une des revendications 1 à 5, caractérisée en ce que les éléments conducteurs de chaleur (18) sont appliqués contre la bande de presse (8, 9) par des ressorts (29, 30).

7. Presse à double bande selon la revendication 6, caractérisée en ce qu'une extrémité des ressorts (29, 30) est fixée contre la plaque de pression (13) et l'autre extrémité est fixée contre l'élément conducteur de chaleur (18).

8. Presse à double bande selon la revendication 7, caractérisée en ce que le corps (31) de l'élément conducteur de chaleur (18) possède des surfaces de réception (39, 47) pour les ressorts (29, 30).

9. Presse à double bande selon l'une des revendications 7 à 8, caractérisée en ce que les ressorts (29, 30) sont soudés ou brasés sur le corps (31) de l'élément conducteur de chaleur (18).

10. Presse à double bande selon l'une des revendications 5 à 9, caractérisée en ce que le ressort (30) est un ressort hélicoïdal.

11. Presse à double bande selon l'une des revendications 6 à 9, caractérisée en ce que le ressort (29) est un ressort-lame.

12. Presse à double bande selon l'une des revendications 1 à 11, caractérisée en ce que l'élément conducteur de chaleur (18) est en cuivre.

13. Presse à double bande selon l'une des revendications 1 à 11, caractérisée en ce que l'élément conducteur de chaleur est en bronze.

14. Presse à double bande selon l'une des revendications 1 à 13, caractérisée en ce que la face (38) du corps (31) tournée vers la bande de presse (8, 9) de l'élément conducteur de chaleur (18), est un réseau de sillons (36) verticaux et de sillons (37) horizontaux.

15. Presse à double bande selon l'une des revendications 1 à 14, caractérisée en ce que le moyen pour chauffer l'élément conducteur de chaleur (18) comprend des perçages (32) réalisés dans le corps de l'élément conducteur de chaleur (18), ces perçages étant traversés par un agent caloporteur chaud.

16. Presse à double bande selon la revendication 15, caractérisée en ce que l'agent caloporteur chaud est de l'huile thermique.

17. Presse à double bande selon l'une des revendications 1 à 14, caractérisée en ce que le moyen pour refroidir l'élément conducteur de chaleur (18) comprend des perçages (32) réalisés dans le corps (31) de l'élément conducteur (18), ces perçages étant traversés par un fluide caloporteur refroidi.

18. Presse à double bande selon la revendication 17, caractérisée en ce que le fluide caloporteur refroidi est de l'eau.

19. Presse à double bande selon la revendication 17, caractérisée en ce que le fluide caloporteur refroidi est du mercure.

20. Presse à double bande selon l'une des revendications 15 à 19, caractérisée en ce que les perçages (32) sont reliés à un conduit d'alimentation (33) et à un conduit de sortie (34) pour le fluide caloporteur, ces conduits arrivant jusqu'à la surface du corps (31) et ce conduit d'alimentation (33) et ce conduit de sortie (34) étant eux-mêmes reliés par un soufflet souple (35) aux conduites d'alimentation de la plaque de pression (13).

21. Presse à double bande selon l'une des revendications 15 à 20, caractérisée en ce que la surface des perçages (32) est augmentée par des nervures.

22. Presse à double bande selon l'une des revendications 15 à 20, caractérisée en ce que les perçages (32) sont munis d'inserts augmentant la surface.

23. Presse à double bande selon l'une des revendications 1 à 14, caractérisée en ce que les moyens pour chauffer l'élément conducteur (18) sont constitués par des éléments chauffants électriques logés dans le corps (31).

24. Presse à double bande selon la revendication 23, caractérisée en ce que l'élément chauffant électrique est une spirale chauffante (45).

25. Presse à double bande selon la revendication 23, caractérisée en ce que l'élément chauffant électrique est un tube chauffant (48).

26. Presse à double bande selon l'une des revendications 1 à 14, caractérisée en ce que le moyen de refroidissement de l'élément conducteur (18) est un élément Peltier (51) prévu dans le corps (31).

27. Presse à double bande selon l'une des revendications 23 à 26, caractérisée en ce que le corps de l'élément conducteur (18) est un boîtier creux (40) cylindrique ouvert à une extrémité et cette extrémité ouverte du boîtier (40) reçoit un couvercle (41) et l'élément chauffant ou l'élément Peltier (51) électrique est logé à l'intérieur du boîtier (40).

28. Presse à double bande selon la revendication 27, caractérisée en ce que le boîtier (40) est soudé au couvercle (41).

29. Presse à double bande selon la revendication 27, caractérisée en ce que le boîtier (40) est brasé au couvercle (41).

30. Presse à double bande selon l'une des revendications 27, 28, 29, caractérisée en ce que le couvercle (41) comporte des passages (43) pour les branchements électriques (44) de l'élément chauffant ou de l'élément Peltier (51) électriques, et ces passages (43) sont remplis d'une masse d'isolation électrique.

31. Presse à double bande selon la revendication 30, caractérisée en ce que la masse isolante électrique est du verre.

32. Presse à double bande selon la revendication 30, caractérisée en ce que la masse isolante électrique est de la matière céramique.

33. Presse à double bande selon les revendications 30 à 32, caractérisée en ce que les branchements électriques (44) sont reliés aux conducteurs électriques de la plaque de pression (13), et ces branchements électriques (44) passent dans un soufflet (35) entre la plaque de pression (13) et le passage (43).

34. Presse à double bande selon l'une des revendications 24, 27-33, caractérisée en ce que la spirale chauffante électrique (45) est noyée complètement dans une masse de matière céramique (46) à bonne conduction thermique qui se trouve à l'intérieur du boîtier (40).

35. Presse à double bande selon l'une des revendications 25, 27-32, caractérisée en ce que le tube chauffant (48) est relié aux parois intérieures et au fond du boîtier (40) avec une soudure dure (49) à conductibilité thermique élevée.

36. Presse à double bande selon l'une des revendications 26-33, caractérisée en ce que l'élément Peltier (51) est appliqué par une face contre le fond (52) du boîtier (40).

37. Presse à double bande selon l'une des revendications 27-36, caractérisée en ce que le boîtier (40) est une pièce en acier obtenue par emboutissage profond, et sa surface est revêtue de cuivre.

38. Presse à double bande selon l'une des revendications 1-37, caractérisée en ce que la plaque de pression (13) est chauffée ou refroidie de manière complémentaire.

39. Presse à double bande selon l'une des revendications 1-38, caractérisée en ce que la plaque de pression (67) dans la presse à double bande (53) est subdivisée en une plaque de chauffage (56) et une plaque de refroidissement (57), de sorte que la presse à double bande (53) possède une zone de chauffage (54) et une zone de refroidissement (55), et dans la zone transitoire entre la zone de chauffage (54) et la zone de refroidissement (55), on a une rainure (68) formée dans la plaque de pression (67), cette rainure (68) recevant au moins un élément conducteur de chaleur (58, 72) et cet élément conducteur de chaleur (58, 72) étant appliqué contre la bande de presse (8, 9) pour réduire les tensions engendrées dans la zone transitoire de la bande de presse (8, 9).

40. Presse à double bande selon la revendication 39, caractérisée en ce que l'élément conducteur de chaleur (58, 72) est susceptible d'être chauffé.

41. Presse à double bande selon la revendication 39, caractérisée en ce que l'élément conducteur de chaleur (58, 72) est susceptible d'être refroidi.

42. Presse à double bande selon l'une des revendications 39-41, caractérisée en ce que l'élément conducteur de chaleur (58, 72) est appliqué contre la bande de presse (8, 9) par des éléments à ressort (60).

43. Presse à double bande, selon l'une des revendications 39-42, caractérisée en ce que l'élément conducteur de chaleur (58, 72) est de forme rectangulaire ou en forme de barreau.

44. Presse à double bande selon la revendication 43, caractérisée en ce que l'élément conducteur de chaleur (58, 72) de forme rectangulaire ou en forme de barreau a une longueur comprise entre la largeur des fentes de pression (66, 71) et la largeur des bandes de presse (8,9).

45. Presse à double bande selon l'une des revendications 39-44, caractérisée en ce que l'élément conducteur de chaleur (72) possède des encoches (83) dans sa face tournée vers la bande de presse (8, 9) et un doigt (84) d'un support en forme de S (85) pénétrant dans cette encoche (83), tandis que l'autre extrémité du support (85) en forme de S est fixée à l'aide de vis (86) à la plaque de pression (13) pour que cet élément conducteur de chaleur (72) soit mobile dans la direction verticale et soit guidé par le support (85) en forme de S.

46. Presse à double bande selon l'une des revendications 39-45, caractérisée en ce que l'élément conducteur de chaleur (72) chauffé électriquement comporte un passage (73) pour le fil de branchement (77), et une extrémité d'un soufflet (78) est fixée à ce passage (76) pour recevoir le fil de branchement (77) qui passe dans le soufflet (78), dans une rainure (79) de la plaque de pression (13), et l'autre extrémité du soufflet (78) est fixée à l'extrémité de la rainure (79) du côté opposé à la bande de presse (8, 9), la rainure (79) débouchant à cette extrémité dans un perçage (82) traversant la plaque de pression (13), et le perçage (82) est fermé par un bouchon (81), le fil de raccordement (77) passant du soufflet (78) dans le bouchon (81) et le passage dans le bouchon (81) et le passage (76) du fil de raccordement (77) étant remplis de manière étanche d'une masse de verre assurant l'isolation électrique.

47. Presse à double bande selon l'une des revendications 39-46, caractérisé par des éléments conducteurs de chaleur (58, 72) supplémentaires prévus dans les zones dans lesquelles il y a des gradients de température.

48. Presse à double bande selon la revendication 47, caractérisée en ce que des éléments conducteurs de chaleur (58, 72) supplémentaires sont prévus dans la zone d'entrée de la presse à double bande (1, 53), là où la bande de presse (8, 9) pénètre dans la zone de chauffage (54).

49. Presse à double bande selon l'une des revendications 39-48, caractérisée en ce que plusieurs éléments conducteurs (58, 72) sont placés les uns derrière les autres dans la zone transitoire, dans le sens de passage de la bande de presse (8,9).

50. Presse à double bande selon l'une des revendications 1 à 49, caractérisée en ce que l'élément conducteur (87) en forme de barre possède plusieurs encoches latérales (88) pour arriver à une flexibilité dans la direction longitudinale.
